# EUROPÄISCHE PATENTANMELDUNG

(11) **EP 1 089 041 A2**
(43) Veröffentlichungstag der Anmeldung: **04.04.2001**
(21) Anmeldenummer: 00119148.5
(22) Anmeldetag: 05.09.2000
(51) Int. Cl.: F24D 11/00, F24D 19/08

(54) **Selbstfüllende Solaranlage**

(30) Priorität: 28.09.1999 AT 67099 U
(71) Anmelder: Huemer Solar GmbH, 4655 Vorchdorf (AT)
(72) Erfinder: Huemer, Herbert, 4655 Vorchdorf (AT)
(74) Vertreter: Schön, Theodor, Patent- und Zivilingenieur

(57) **Zusammenfassung**

Die Erfindung betrifft eine Solaranlage mit einer Pumpe für das Wärmeträgermedium und einem nachgeschalteten Speicherbehälter, sowie einer den Speicherbehälter außen umfassenden Isolation, wobei die Pumpe als Druckpumpe ausgebildet ist und in der Zuleitung zum Kollektor angeordnet ist. Die Ableitung des Kollektors mündet in einem Entlüftungsrohr, welches mit einem Ausgleichsbehälter oder in einem Schichtladerohr verbunden ist.

## Beschreibung

Die Erfindung betrifft eine selbstfüllende Solaranlage mit einer Pumpe für das Wärmeträgermedium und einem nachgeschalteten, isolierten Speicherbehälter. Sowohl das Zuleitungs- als auch das Rücklaufleitungsrohr stehen mit einem Schichtladerohr in Verbindung.

Herkömmliche Solaranlagen zur Warmwassergewinnung weisen im unteren Bereich des Speichers einen Wärmetauscher auf, wie etwa aus der W097/341 l 1 hervorgeht. In einem geschlossenen Kreislauf mit einem integrierten Membranausdehnungsgefäß und einem Überdruckventil wird mittels einer Pumpe die Solarwärme vom Kollektor in den Speicher transportiert.

Andere Systeme, wie in der WO 97/23758 beschrieben, speisen das Kollektorablaufwasser in den oberen Bereich eines Speicherbehälters, wobei in der Rücklaufleitung vom Kollektor zum Speicher eine Pumpe vorgesehen ist, und führen aus dem unteren Bereich des Speichers das kältere Wärmeträgermedium zum Kollektor zurück. Die im Speicher gesammelte thermische Energie wird über einen externen Wärmetauscher an den Verbraucher abgegeben.

Zur Entlüftung ist üblicherweise ein Ventil vorgesehen, welches über dem höchsten Punkt der Wärmeträger führenden Leitungen über Dach angeordnet ist. Zum Erstbefüllen und für Wartungszwecke muß eine eigene Füllpumpe eingesetzt werden, da bei Luft in der Anlage die Pumpe ihre Wirkung verliert. Bei einem Stillstand der Pumpe beginnt der Kollektor langsam auszulaufen und seine Leitungen füllen sich nach und nach mit Luft. Wird die Anlage wieder gestartet, so muß mit einer komplizierten Steuerung der Pumpe in der Startphase erst wieder vorsichtig der Kollektor befüllt werden, ehe die Gewinnung von Warmwasser mit Solarenergie wieder voll anlaufen kann.

Die vorliegende Erfindung stellt sich die Aufgabe, ausgehend von einer Anlage nach dem Oberbegriff des Anspruches 1 eine Solaranlage mit nachgeschaltetem Speicher zu schaffen, welche auch bei einem länger anhaltenden Stillstand der Anlage den Kollektor bzw. das Register des Kollektors in voll befülltem Zustand erhält.

Diese Aufgabe wird dadurch gelöst, daß in die Vorlaufleitung vom Speicherbehälter zum Kollektor und in die Rücklaufleitung vom Kollektor bzw. Register des Kollektors zum Speicherbehälter wechselweise eine Pumpe und eine Entlüftungseinrichtung eingeschaltet sind.

Dabei ist die Pumpe als Druckpumpe ausgebildet und in der Vorlaufleitung zum Kollektor angeordnet.
An die Rücklaufleitung zum Speicherbehälter kann ein mit einem Ausgleichsbehälter zu einer Baueinheit vereinigter Gasabscheider angeschlossen sein.

Zur Abscheidung von Gasblasen aus der rücklaufenden Wärmeträgerflüssigkeit kann vorteilhaft aber auch vorgesehen sein, daß die Rücklaufleitung vom Kollektor in ein Schichtladerohr mündet, welches selbst eine Entlüftungseinrichtung bildet und/ oder mit einem eine Entlüftungseinrichtung bildenden Ausgleichsbehälter in Verbindung steht.

Bei einer bevorzugten Ausführungsform ist im Speicher ein Register angeordnet, welches ebenso wie die bereits in der Kollektorvorlaufleitung angeschlossene Pumpe, das Schichtladerohr und der ebenfalls bereits montierte Ausgleichsbehälter noch vor der Auslieferung zum Bestimmungsort werksseitig vollständig gefüllt wird. Sobald die Rohrleitungen und die Kollektoren angeschlossen werden, wird mittels der Druckpumpe der Kollektor mit dem Wärmeträgermedium blasenfrei befüllt, wobei die im System vorhandene Luft verdrängt und im Schichtladerohr bzw. im Ausgleichsbehälter gesammelt wird.

Falls die Rücklaufleitung des Kollektors bis in den unteren Bereich des Schichtladerohres reicht, und der überwiegende Teil des Schichtladerohres mit Wärmeträgerflüssigkeit gefüllt ist, können aus der Rücklaufleitung des Kollektors austretenden Gasblasen im oberen Bereich des Schichtladerohres bzw. in einem an diesen angeschlossenen Ausgleichsgefäß gesammelt und zurückgehalten werden, so daß bei Stillstand der Pumpe eine Rückführung des Gases über die Rücklaufleitung zurück in den Kollektor befürchtet werden muß.

Sobald die Wärmeträgerflüssigkeit aufgrund der Schwerkraft aus dem Kollektor auszurinnen versucht wird über die Rücklaufleitung automatisch neue Wärmeträgerflüssigkeit aus dem Schichtladerohr in den Kollektor angezogen. Diese automatische Befüllung entgegen der normalen Fließrichtung der Wärmeträgerflüssigkeit bei abgeschalteter Pumpe ist auch bei einer starken Abkühlung der Wärmeträgerflüssigkeit, z.B. in den sonnenarmen Wintermonaten von Vorteil.

Ein weiterer Vorteil ergibt sich aus der Tatsache der ständigen Befüllung, dahingehend, daß infolge der ständigen ßefüllung der Rohrleitungen der Eintritt von Gas, insbesondere Frischluft, vermieden ist und die Rohrleitungen dadurch eine wesentlich geringere Korrosionsabnützung haben

Die Erfindung wird anhand der Figuren näher erläutert.

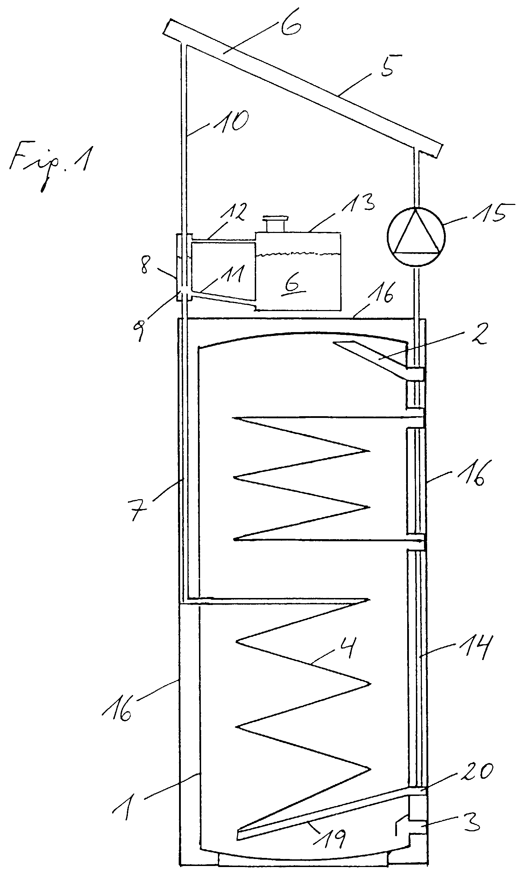

Fig. 1 zeigt einen vertikal angeordneten Speicherbehälter 1, der in seinem oberen Bereich eine Warmwasserentnahmevorrichtung 2 und in seinem unteren Bereich einen Kaltwasserzulauf 3 hat. In etwa die Hälfte des oberen Rauminhaltes des Speicherbehälters 1 ragt eine Heizwendel, welche über eine alternative Energiequelle das Wasser im Speicherbehälter 1 erwärmt. Im unteren Bereich des Speicherbehälters 1 verläuft eine Wendel 4, über die die im Kollektor 5 erwärmte Wärmeträgerflüssigkeit 6 ihre thermische Energie an das kühlere Wasser Speicherbehälter 1 abgibt.

Die Wendel 4 ragt mit ihrer Zulaufleitung 7 durch den Boden eines einen Gasabscheider bildenden Entlüftungsrohres 8 in dessen unteren Bereich 9. In unmittelbarer Nähe dazu liegt die Öffnung der Kollektorrücklaufleitung 10. Das Entlüftungsrohr 8 ist über Verbindungsleitungen 11 und 12 mit einem Ausgleichsgefäß 13 verbunden. Die Leitung 11 dient zum Füllstandsausgleich, die Leitung 12 zum Luftaustausch zwischen dem Entlüftungsrohr 8 und dem Ausgleichsgefäß 13. Die Vorlaufleitung 14 der Wendel 4 führt die Wärmeträgerflüssigkeit 6 über die Pumpe 15 zurück in den Kollektor 5. Der Speicherbehälter 1 ist von einer Isolation 16 umhüllt.

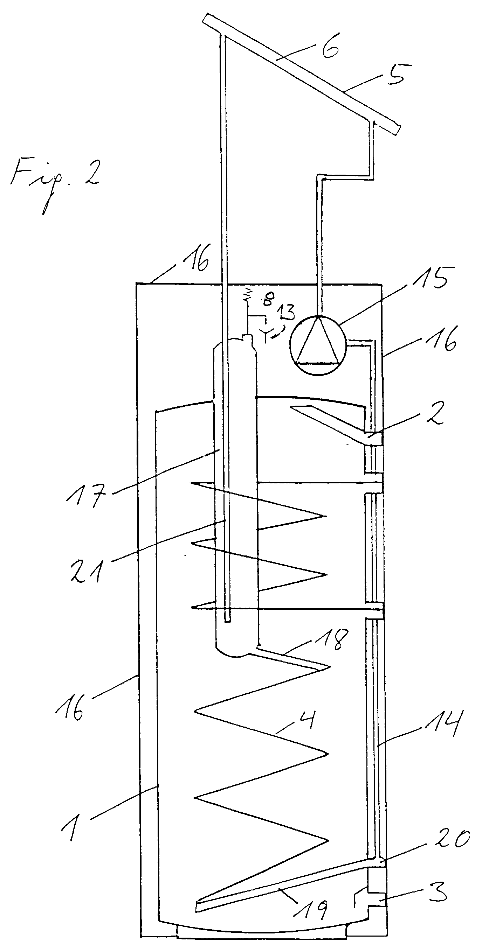

Fig. 2 zeigt eine alternative Ausführungsform der Erfindung. Hier sind das Entlüftungsrohr 8, der Ausgleichsbehälter 13 und ein Schichtladerohr 21 mit einem einzigen Gefäß 17 zusammengefaßt. Diese Variante ist besonders energiesparend ausgebildet, da hier die Isolation 16 neben dem Speicherbehälter 1 auch das in diesen integrierte Gefäß 17 und die unmittelbar über dem Speicherbehälter 1 angeordnete Pumpe 15 umhüllt. Im untersten Bereich des Gefäßes 17 zweigt eine Leitung 18 ab, durch welche die Wärmeträgerflüssigkeit 6 zur Wendel 4 gelangt und diese wie im Ausführungsbeispiel gemäß der Fig. 1 über die Leitung 19 in Richtung zur Vorlaufleitung 14 hin verläßt. Über diese Leitung 19 kann die Wärmeträgerflüssigkeit 6 über einen im Übergangsbereich zur Vorlaufleitung 14 angeformten Auslaß 20 aus dem an sich geschlossenen System abgeführt werden.

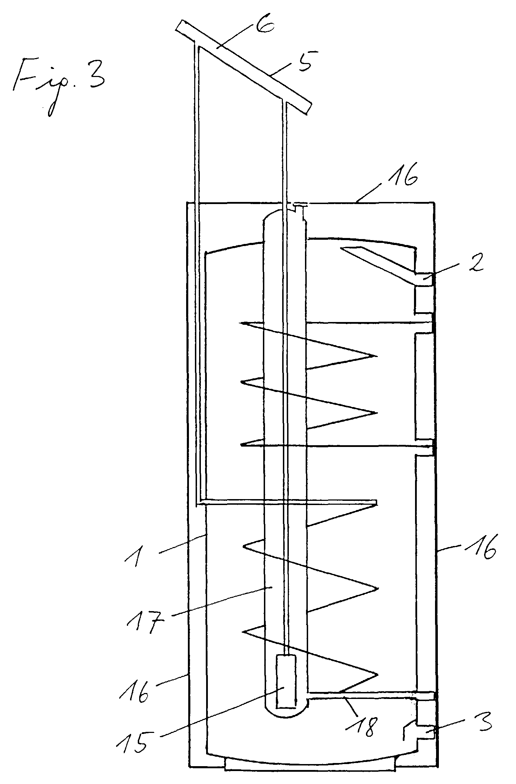

Eine weitere alternative Ausführungsform ist in Fig. 3 dargestellt. Hier ist die Pumpe 15 als Tauchpumpe ausgebildet, welche im unteren Bereich des Gefäßes 17 in unmittelbarer Nähe zur Leitung 18 angeordnet ist. Der besondere Vorteil dieser Ausführungsform ist darin zu sehen, daß die Pumpe nicht selbstsaugend sein muß. Darüber hinaus ist sowohl der Einbau der Pumpe als auch ein eventuelles Auswechseln derselben wesentlich einfacher durchführbar.

## Patentansprüche

1. Solaranlage mit einem Kollektor (5), einem Speicherbehälter (1) für eine zu erwärmende Flüssigkeit, insbesondere Wasser, einer einerseits über eine Vorlauf-(14), andererseits über eine Rücklaufleitung (7, 10 bzw. 21) mit dem Kollektor (5) verbundene Wendel (4) zur Durchführung der Wärmeträgerflüssigkeit durch den Speicherbehälter (1) und einer Pumpe (15) für die Förderung der Wärmeträgerflüssigkeit (6) sowie einer mindestens den Speicherbehälter (1) außen umfassenden Isolation (16), dadurch gekennzeichnet, daß in die Vorlaufleitung (14) vom Speicherbehälter (1) zum Kollektor (5) und in die Rücklaufleitung (7, 10) vom Kollektor (5) zum Speicherbehälter (1) wechselweise die Pumpe (15) und eine Entlüftungseinrichtung (8,13 bzw. 17) eingeschaltet sind.

2. Solaranlage nach Anspruch l, dadurch gekennzeichnet, daß die Pumpe (15) als Druckpumpe ausgebildet und über dem Speicherbehälter (1) in der Vorlaufleitung (14) zum Kollektor (5) und eine aus einem Entlüftungsrohr (8) und einem mit diesem verbundenen Ausgleichsbehälter (13) bestehende Entlüftungseinrichtung in der Rücklaufleitung (7, 10 ) vom Kollektor (5) angeordnet ist.

3. Solaranlage nach Anspruch 1 und 2, dadurch gekennzeichnet, daß die Pumpe (15) unmittelbar über dem Speicherbehälter (1) angeordnet und zusammen mit einer Entlüftungseinrichtung sowie gegebenenfalls vorgesehenen Sicherheitseinrichtungen innerhalb der Isolation (16) untergebracht ist.

4. Solaranlage nach Anspruch 1, dadurch gekennzeichnet, daß die Rücklauflaufleitung (21) vom Kollektor (5) innerhalb des Speicherbehälters (1) in einem in den Speicherbehälter (1) eintauchenden Schichtladerohr (17) mündet

5. Solaranlage nach Anspruch 4, dadurch gekennzeichnet, daß. das Schichtladerohr (17) selbst eine Entlüftungseinrichtung und einen Ausgleichsbehälter bildet.

6. Solaranlage nach Anspruch 4 und 5, dadurch gekennzeichnet, daß an das Schichtladerohr (17) eine zumindest einen Gasabscheider umfassende Entlüftungseinrichtung angeschlossen ist.

7. Solaranlage nach einem der Ansprüche 4 bis 6, dadurch gekennzeichnet, daß die Pumpe (15) als Tauchpumpe ausgebildet und innerhalb eines Schichtladerohres (17) angeordnet ist.

8. Solaranlage nach einem der Ansprüche 4 bis 7, dadurch gekennzeichnet, daß die Vorlaufleitung (14) zum Kollektor (5) m unteren Bereich des Schichtladerohres (17) ihren Ausgang nimmt.

9. Solaranlage nach einem der Ansprüche 1 bis 8, dadurch gekennzeichnet, daß im Entlüftungsrohr (8) und im Ausgleichsbehälter (13) sowohl eine flüssige als auch eine gasförmige Phase der Wärmeträgerflüssigkeit (6) vorhanden sind.

10. Solaranlage nach einem der Ansprüche l bis 9, dadurch gekennzeichnet, daß die Vor-(14) und die Rücklaufleitungsrohre (7,10 bzw. 21) des Kollektors (5), die Pumpe (15), das Entlüftungsrohr (8) und der Ausgleichsbehälter (13) bzw. das Schichtladerohr (17) im Auslieferungszustand vollständig mit Wärmeträgerflüssigkeit (6) gefüllt sind.
